(19) **Europäisches Patentamt / European Patent Office / Office européen des brevets**

(11) **EP 2 713 532 B1**

(12) **EUROPEAN PATENT SPECIFICATION**

(45) Date of publication and mention
of the grant of the patent:
**11.04.2018 Bulletin 2018/15**

(21) Application number: **12306173.1**

(22) Date of filing: **27.09.2012**

(51) Int Cl.:
*H04B 10/61* (2013.01)

(54) **Optical coherent transponder**

Optischer kohärenter Transponder

Transpondeur optique cohérent

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.04.2014 Bulletin 2014/14**

(73) Proprietor: **ALCATEL LUCENT
92100 Boulogne-Billancourt (FR)**

(72) Inventors:
- **Charlet, Gabriel
  91300 Massy (FR)**
- **Rios Muller, Rafael
  75014 Paris (FR)**
- **Renaudier, Jeremie
  91190 GIF/YVETTE (FR)**

(74) Representative: **Browne, Robin Forsythe
Hepworth Browne
15 St Paul's Street
Leeds LS1 2JG (GB)**

(56) References cited:
EP-A1- 2 493 101          WO-A1-2010/105684
WO-A1-2011/044371     US-A- 4 916 705

- SEB J SAVORY: "Digital filters for coherent optical receivers", OPTICS EXPRESS, OSA (OPTICAL SOCIETY OF AMERICA), WASHINGTON DC, (US), vol. 16, no. 2, 21 January 2008 (2008-01-21), pages 804-817, XP007906766, ISSN: 1094-4087, DOI: 10.1364/OE.16.000804
- IP E M ET AL: "Fiber Impairment Compensation Using Coherent Detection and Digital Signal Processing", JOURNAL OF LIGHTWAVE TECHNOLOGY, IEEE SERVICE CENTER, NEW YORK, NY, US, vol. 28, no. 4, 15 February 2010 (2010-02-15), pages 502-519, XP011294709, ISSN: 0733-8724

Description

Field of the invention

The invention relates to an optical coherent transponder

Background

For transmitting data using an optical signal, it is a known concept to rely on coherent data transmission. In such a coherent data transmission, an optical carrier signal of a carrier frequency is modulated in dependence on the data to be transmitted. The optical transmission signal is generated, by modulating the optical carrier signal using a modulation scheme, in which the phase and/or the amplitude of the carrier signal is modulated in dependence on the transmitted data. An example of a method exploiting phase modulation only is the one called Binary Phase Shift Keying. An example of a method exploiting phase and amplitude modulation is the one called Quadrature Phase Shift Keying.

At a transmitting side, the modulation of the optical carrier signal may be carried out, by deriving Inphase- and Quadrature-signal components in the optical domain, and then obtaining the modulated optical transmission signal, by combining the optical Inphase- and Quadrature-signal components with the optical carrier signal in the optical domain.

In coherent data transmission, a receiving side uses an optical carrier signal for down-converting the received optical signal, which leads to received Inphase- and Quadrature-signal components. Such a down-converting may be carried out, by overlaying the optical carrier signal with the received optical signal in the optical domain. Thus, a receiving side uses for reception an optical carrier signal of approximately the same frequency as the optical carrier signal used at the transmitting side.

Such down-converting and deriving of Inphase- and Quadrature-signal components is usually carried out within a so called coherent optical front end.

The document EP 2493101 A1 discloses an optical receiver setup that comprises first reception means configured to receive a first plurality of distorted wavelength division multiplex (WDM) channel signals and second reception means configured to receive a second plurality of distorted WDM channel signals as well as switching means configured to link a first set of the first plurality of distorted WDM channel signals and a complementary second set of the second plurality of distorted WDM channel signals to a plurality of optical receivers.

Summary

Proposed is an optical coherent transponder.
The transponder comprises within a transmission stage an optical amplifier, which is connectable to an optical fiber.

Furthermore, the transponder comprises within a reception stage

- a tunable laser, which provides an optical carrier frequency signal,

- a coherent optical front end, which down-converts a received optical signal received at an input of the coherent optical front end, using the optical carrier frequency signal, and which converts the obtained down-converted optical signal to at least one down-converted electrical signal,

- an analogue-digital converter, which converts the down-converted electrical signal to a digital signal,

- and a digital signal processor, which filters the digital signal.

Furthermore, the transponder comprises two optical switches, which are jointly configurable to connect either the output of the optical amplifier or a further optical fiber with the input of the coherent optical front end. The further optical fiber is preferably an optical fiber for optical data transmission.
The digital signal processor is able to filter the digital signal, such that a frequency response of the filtered digital signal is essentially flat within a pre-defined spectral range. Preferably, the digital signal is filtered, such that a magnitude of a frequency response of the filtered digital signal is essentially flat within a pre-defined spectral range
In order to grasp the advantages of the proposed device, the following aspects have to be taken into consideration.
When receiving an optical data transmission signal from the further optical fiber, the transponder relies on the coherent front end and the analogue digital converter for deriving a digital signal. From such a digital signal, the digital signal processor may then derive received data values.
Devices such as the coherent front end and the analogue digital converter should not affect the received signal, or in other words, should have a flat frequency response, at least within a desired spectral range. Due to imperfections of the coherent front end and/or the analogue digital converter, it may be the case, that the overall frequency response of the coherent front end and the analogue digital converter is not flat within the desired spectral range.
Within the transponder, there are two optical switches at hand. These switches are jointly configurable to connect either the output of the optical amplifier or the further optical fiber with the input of the coherent optical front end. Thus, in one configuration, the switches may be configured, such that the further optical fiber is connected directly or indirectly with the coherent front end, which would be the case for normal data reception. Furthermore, in another configuration, the switches may be configured to connect the optical amplifier directly or indirectly with the coherent front end, which is followed by the analogue digital converter and furthermore by the digital signal processor.

In the latter configuration state, the signal processor will receive a signal generated by the optical amplifier, which is then affected by the coherent front end and the analogue digital converter. Due to the fact, that an optical amplifier generates amplified spontaneous emission (ASE) noise, and furthermore due to the fact, that such ASE noise may be considered to have a flat spectrum within a desired spectral range, the result is, that the signal processor will receive a signal, whose spectrum is affected by the imperfect combined frequency response of the coherent front end and the analogue digital converter. The signal processor may then estimate this combined frequency response and apply a filter, which causes an inverse filtering with respect to the combined frequency response, for obtaining a frequency response of the filtered signal that is essentially flat within the desired spectral range. Thus, this filtering, applied by the digital signal processor, achieves a compensation of the imperfect combined frequency response of at least the coherent optical front end and the analogue digital converter. By applying this determined inverse filter also during normal data reception mode, when decoding received data from an optical signal received from the further optical fiber, it is possible to achieve a more reliable data reception with a reduced error rate.

**Brief description of the drawings**

Figure 1 shows a proposed transponder according to a preferred embodiment.

Figure 2 a shows examples of imperfect combined frequency responses.

Figure 2b shows examples of frequency responses of filtered digital signals.

Figure 3 shows steps of a method for measuring a combined frequency response.

Figure 4 shows measured combined frequency responses of transmission parts.

Figure 5 shows different steps of a method for measuring combined frequency responses of transmission parts.

Figure 6 shows examples of Q factors for different methods of transmitting optical data.

**Description of embodiments**

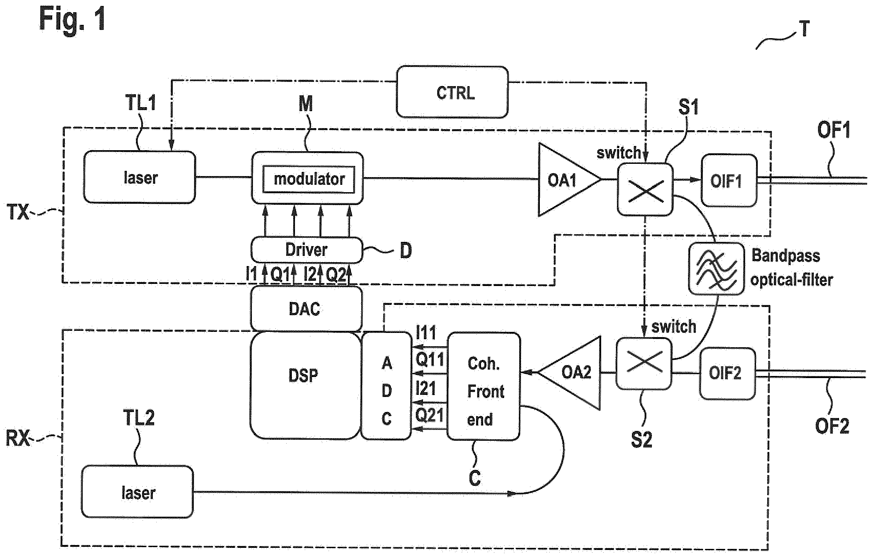

Figure 1 shows a transponder T, which contains within a transmission stage TX an optical amplifer OA1. The amplifier OA1 is indirectly connected to an optical fiber OF1 for optical data transmission. The amplifier is connected to the fiber OF1 via an optical switch S1 and an optical interface OIF1.

An input of the switch S1 is connected to an output of the optical amplifier OA1. A first output of the switch S1 is connected to the transmission optical interface OIF1.

A second output of the switch S1 is connected to an input of a further optical switch OA2, which is contained within a reception stage RX. A reception optical fiber OF2 is connected to a further input of the optical switch OA2. Finally, an output of the optical switch S2 is connected to the input of a coherent optical front end C. Preferably, the output of the switch S2 and the input of the front end C are connected, using a further optical amplifier OA2.

The reception stage RX contains furthermore a tunable laser TL2, which provides an optical carrier frequency signal to the coherent optical front end C.

The coherent optical front end C is able to down-convert a received optical signal received at its input, using the optical carrier frequency signal. Furthermore, the coherent optical front end C is able to convert the obtained down-converted optical signal to at least one down-converted electrical signal I11, Q11, I21, Q21. In this example, an optical data transmission technique using polarization division multiplexing is carried out, in which for each optical signal of an orthogonal polarization state a respective set of Inphase-signal components I11 or I21 and Quadrature-Signal components Q11 or Q21 is derived. Preferably, the proposed device may perform a derivation of Inphase-signal components and Quadrature-Signal components for one optical signal only when not exploiting the technique of polarization division multiplexing.

An analogue-digital converter ADC converts the down-converted electrical signals I11, I21, Q11, Q21 to at least one digital signal.

A digital signal processor DSP is able to filter the digital signal.

A configuration of the switches S1 and S2 is configurable via a control unit CTRL.

The switches S1 and S2 are jointly configurable, to connect directly of indirectly the output of the optical amplifier OA1 with the input of the coherent optical front end C. Furthermore, the switches S1 and S2 are jointly configurable, to connect directly or indirectly a further optical fiber OF2 with the input of the coherent optical front end C.

The digital signal processor DSP is able to filter the obtained digital signal, such that a frequency response of the filtered digital signal is essentially flat within a pre-defined spectral range.

As it has been outlined previously above, the transponder T relies on the coherent front end C and the analogue digital converter ADC for deriving the digital signal, while devices such as the coherent front end and the analogue digital converter should have a flat frequency response, at least within a desired spectral range.

Since the optical amplifier OA1 generates ASE noise, which has a flat spectrum within a desired spectral range, the signal processor will receive a signal, whose spectrum is affected by an imperfect combined frequency response of the coherent front end and the analogue digital converter.

For allowing the optical amplifier OA1 to generate the ASE noise, the control unit is preferably able to switch a tunable laser TL1 of the transmission stage TX, which is coupled indirectly to an input of the amplifier OA1, on or off. The tunable laser TL1 may be used during a data transmission mode for providing an optical transmission carrier frequency.

Furthermore, the output of the switch S1 is connected to one of the inputs of the switch S2 by means of an optical bandpass filter B, which limits the signal provided by the amplifier OA1 to the desired pre-defined spectral range.

In a measurement mode, the control unit CTRL configures the switch S1, such that the signal coming from the amplifier OA1 is provided via the second output of the switch S1 to the first input of the second switch S2. Furthermore, in measurement mode, the control unit CTRL configures the switch S2, such that the signal received at the first input of the switch S2 is provided via the output of the switch S2 to the input of the front end C. This provisioning is preferably carried out via the amplifier OA2.

Then, in measurement mode, the signal processor DSP measures an estimated combined frequency response of at least the front end C and the converter ADC. This is made possible, since the signal provided by the amplifier OA1 is essentially of a flat spectrum for a desired spectral range. For this, preferably, the tunable laser TL1 is switched off by the control unit CTRL.

The ASE noise generated by the amplifier OA1 has preferably a bandwidth in the range of 4 to 5 THz. A filtering of this ASE noise may be carried out by the bandpass filter B. The filter B preferably has a bandwidth in the range of 100 to 400 GHz. The amplifier OA1 is preferably a doped fiber amplifier, or an erbium doped amplifier in more detail.

The processor DSP measures the spectrum of the obtained digital signal, either by doing an offline processing of recorded samples in the memory of an ASIC, or directly after a spectral transform, which is preferably a Fast Fourier Transform. More preferably, multiple obtained spectra are averaged for obtaining a more reliable estimate.

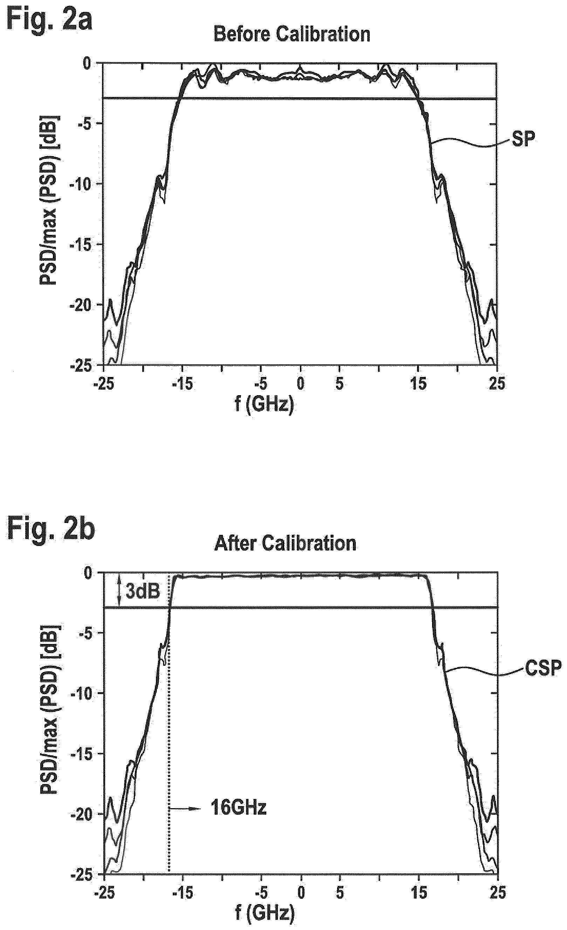

Figure 2a shows examples of magnitudes of measured spectra SP of digital signals for a desired spectral range of 16 GHz. In the example of Figure 2a, four magnitudes of spectra are given for respective Inphase- or Quadrature-signal components for polarization division multiplexing previously mentioned. Clearly, the measured spectra SP show undesired ripples in the range from -16 GHz to +16 GHz, or in other words, show a non-flat spectrum in the desired range. Therefore, the combined frequency response within the receiver is non-perfect.

The signal processor determines a filter function, which is inverse to an estimated combined frequency response. Furthermore, this inverse filter function is applied in normal data transmission mode, for deriving data from a received optical data signal more reliably.

Figure 2b shows resulting overall magnitude frequency responses, or overall magnitude spectra CSP, after compensating the estimated combined frequency responses within the receiver stage with the inverse filter function. Clearly, these overall magnitude spectra CSP are essentially flat within the desired spectral range.

Such a frequency response calibration as proposed herein can be easily implemented within a chromatic dispersion step carried out within the signal processor without requiring any hardware changes.

Preferably, the signal processor DSP of Figure 1 filters an obtained digital signal using a pulse-shaping filter, such as a root-raised cosine filter. Such a pulse shaping filter may be applied at a transmitting side to transmitted data symbols, and then also on a receiving side, such that the two applied pulse-shaping filters form Matched filters reducing an Intersymbol Interference (ISI) of transmitted data symbols.

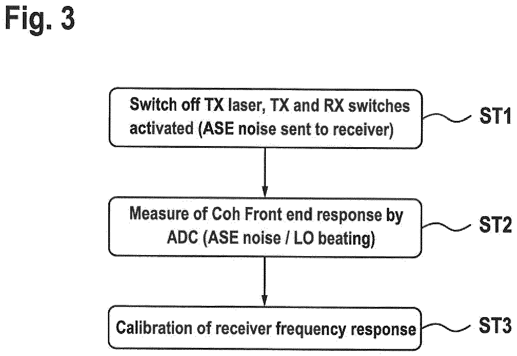

Figure 3 shows steps of a method for calibrating the receiver stage RX of Figure 2.

In a first step ST1, the control unit CTRL switches off the laser of the transmission stage. Furthermore, the switches of the transponder are switched to the previously described measurement mode.

In a second step ST2, the resulting combined frequency response of the receiver stage is measured.

In a third step ST3, the receiver stage is calibrated, by applying an inverse filtering as previously described above.

After a calibration of the receiver stage, it is then possible to furthermore calibrate the transmission stage of the transponder also. This will be described in detail in the following.

As previously mentioned, an optical transmission carrier signal is provided by the tunable laser TL1 shown in Figure 1.

An optical modulator M modulates the optical transmission carrier signal in dependence on one or more electrical signals. These electrical signals are at first generated as digital data signals in a digital domain by the signal processor DSP and then converted by a digital analogue-converter DAC to analogue electrical signals I1, Q1, I2, Q2. In the example shown in Figure 1, a first set of an Inphase-signal component I1 and a Quadrature-signal component Q1 is generated, for later on modulating the carrier signal in a first polarization state. Furthermore, in this example, a second set of an Inphase-signal component I2 and a Quadrature-signal component Q2 is generated, for later on modulating the carrier signal in a second polarization state, which is orthogonal to the first polarization state. In contrast to shown example, it would be possible to generate only one set of signal components for later on modulating the carrier signal.

The analogue electrical data signals I1, Q1, I2, Q2 are preferable amplified by an electrical driving amplifier D, which provides the amplified electrical signal to the modulator M. Thus, the converter DAX provides the analogue electrical data signals I1, Q1, I2, Q2 indirectly to the modulator M, using the driving amplifier D.

Since the overall receiving stage RX, including the coherent optical front end C, the converter ADC and the processor DSP applying inverse filtering, has been calibrated by means of the inverse filtering, remaining imperfections of the driver D as well as the converter DAC may now be measured and compensated, for calibrating the transmitting stage TX.

For this, the switches S1 and S2 are configured by the control unit CTRL to the previously mentioned measurement mode. Furthermore, the laser TL1 is preferably turned on under control of the control unit CTRL.

Then, the processor DSP provides a sequence of data signals to the converter DAC, which cause a modulation of the optical transmission carrier signal, which then is received via the switches S1, S2, the front end C and the converter DAC again within the processor.

Preferably, the processor filters the generated digital data signal using a pulse-shaping filter, such as a raised-cosine filter, before providing the digital data signals to the converter DAC. Furthermore, the processor DSP filters a received digital signal also using such a same pulse-shaping filter. This ensures transmission using a Matched Filter for reducing an Intersymbol Interference.

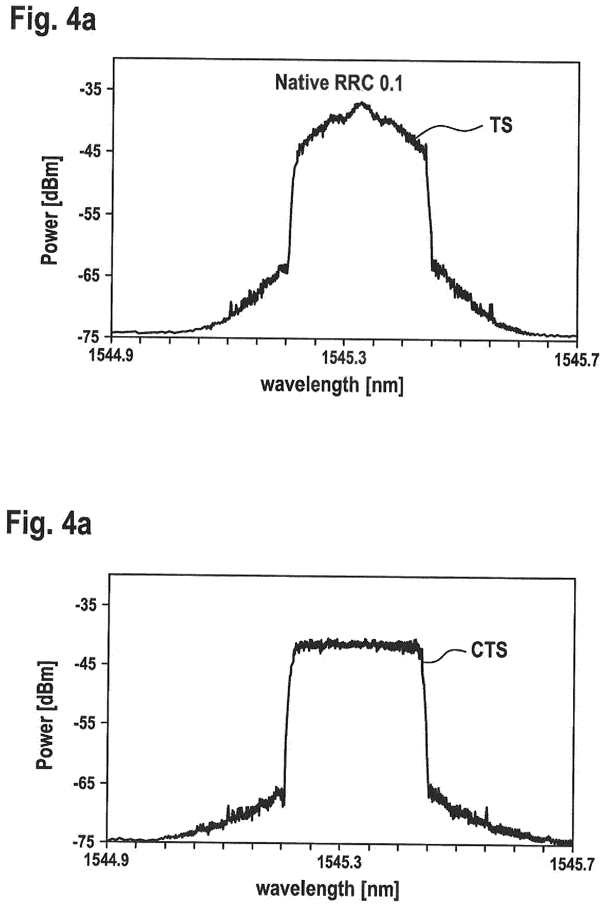

The digital signal received in this measurement mode is analysed in a spectral domain. Figure 4 a shows a measurement example of a spectrum TS, or frequency response TS, for a received data signal, in the case that a roll-off factor of 0.1 is used for a root-raised cosine filter. Clearly, the spectrum is not flat within a desired range of 28 GHz.

The processor DSP thus applies a pre-distortion filter to the digital data signals provided to the converter DAC. This pre-distortion filter is chosen, such that the resulting overall frequency response of the digital signal, passing the transmitting stage and the receiving stage and then received at the processor DSP, is essentially flat within the desired pre-defined spectral range, in this example a range of 28 GHz.

The pre-distortion filter is preferably realized, by modifying filter coefficients of the pulse-shaping filter, in this case the root-raised cosine filter, used for filtering the digital data signals before providing them to the converter DAC.

An example of a resulting overall frequency response CTS of the transmitting stage and the receiving stage including the pre-distortion filtering is shown in Figure 4b. Clearly, this overall frequency response CTS is essentially flat within the desired spectral range. Furthermore, the processor applies pre-distortion filtering also such, that a non-linearity of the transmitting stage causing an out of band signal in the spectrum TS of Figure 4a is reduced, as it can be seen in Figure 4b.

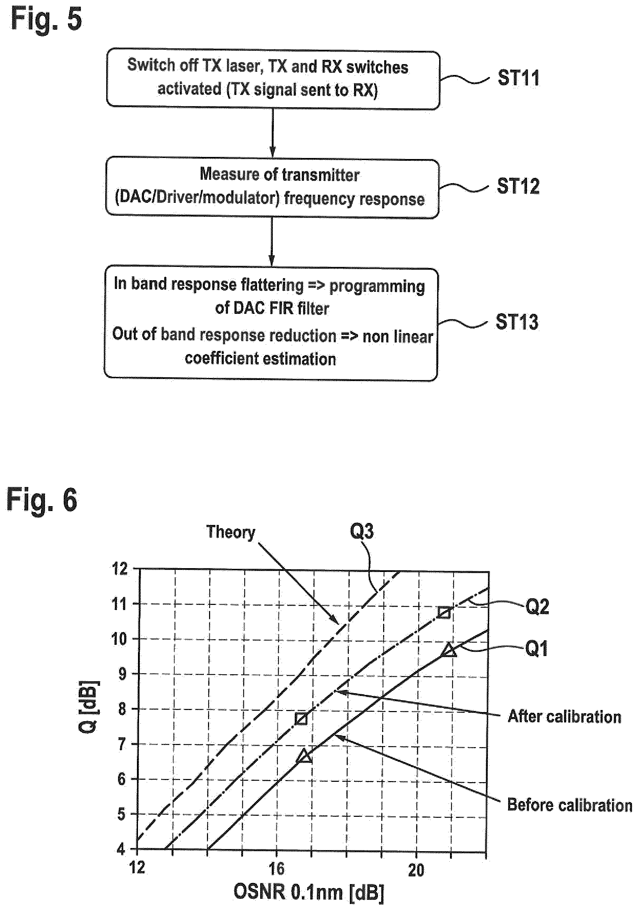

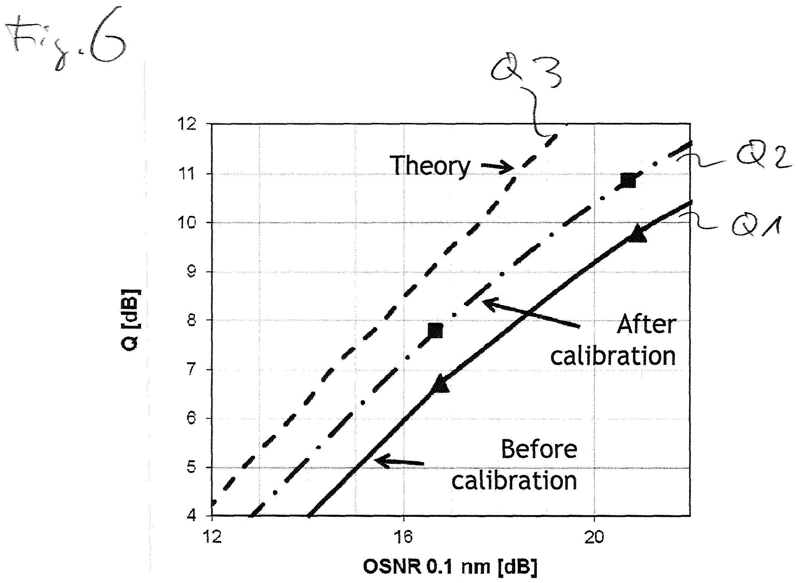

Figure 5 shows steps of a method proposed herein for calibrating a transmission stage of the transponder. In a step ST11, the transmission laser is turned on and the switches are configured to measurement mode.

In a step ST12, the frequency response of the transmitting stage, including the digital-analogue converter, the driving amplifier and the modulator, is measure.

In a step ST13, the resulting frequency response is realized, by choosing a pre-distortion filter before the digital-analogue converter as previously described above. Furthermore, preferably, an out of band response is reduced using non linear coefficient estimation.

Figure 6 shows an estimated quality of the transmitter and the receiver. The quality is shown by means of the Q-factor over an optical signal to noise ratio (OSNR). The Q-factor is in direct relation to the bit-error ratio BER via

$$\mathrm{BER} = \frac{1}{2}\mathrm{erfc}(\frac{Q}{\sqrt{2}})$$

$$\mathrm{erfc}(x) = \frac{2}{\sqrt{\pi}} \int\limits_{x}^{+\infty} e^{-y^2} dy$$

The curve Q1 shows a performance when using no pre-distortion at all. The curve Q2 shows a performance, in the case that a pre-distortion filter is applied. The curve Q3 shows a theoretical performance. All curves are plotted for a 28Gbaud polarization division multiplexing 8-QAM signal.

## Claims

1. Optical coherent transponder,
   comprising within a transmission stage (TX) an optical amplifier (OA1), which is connectable to an optical fiber (OF1),
   comprising within a reception stage (RX)

   - a coherent optical front end (C), operable to down-convert a received optical signal received at an input of said coherent optical front end (C), using an optical carrier frequency signal, and furthermore operable to convert said obtained down-converted optical signal to at least one down-converted electrical signal,

- an analogue-digital converter (ADC), operable to convert said down-converted electrical signal to at least one digital signal,

- at least one digital signal processor (DSP), operable to filter said digital signal,

comprising furthermore at least a first (S1) and a second (S2) optical switch, wherein said digital signal processor (DSP) is furthermore operable to filter said digital signal, such that a frequency response of the filtered digital signal is essentially flat within a pre-defined spectral range, **characterized by**

- a tunable laser (TL2), operable to provide said optical carrier frequency signal,

furthermore **characterized in that** said first and a second optical switch (S1, S2) are jointly configurable to connect said output of said optical amplifier (OA1) or a further optical fiber with said input of said coherent optical front end (C),

2. Optical coherent transponder according to claim 1, comprising furthermore at least one control unit (CTRL), which is operable to control a configuration of said optical switches (S1, S2).

3. Optical coherent transponder according to claim 1, wherein an input of said first optical switch (S1) is connected to said output of said optical amplifier (OA1),
wherein a first output of said first optical switch (S1) is connected to a transmission optical interface (OIF1),
wherein a second output of said first optical switch (S1) is connected to a first input of said second optical switch (S2),
wherein a reception optical fiber (OF2) is connected to a second input of said second optical switch (S2), and wherein an output of said second optical switch (S2) is connected to said input of said coherent optical front end (C).

4. Optical coherent transponder according to claim 3, wherein said second output of said first optical switch (S1) is connected indirectly to said first input of said second optical switch (S2) via an optical bandpass filter.

5. Optical coherent transponder according to claim 3, wherein said output of said second optical switch (S2) is connected indirectly to said input of said coherent optical front end (C) via a further optical amplifier (OA2).

6. Optical coherent transponder according to claim 1, wherein said tunable laser (TL2) is connected to a further input of said coherent optical front end (C).

7. Optical coherent transponder according to claim 2, wherein said transmission stage (TX) comprises furthermore a further tunable laser (TL1), which is operable to provide an optical transmission carrier frequency signal,
wherein said further tunable laser (TL1) is connected via an optical modulation device (M) with an input of said optical amplifier (OA1),
and wherein said control unit (CTRL) is operable to switch said further tunable laser (TL1) on and off.

8. Optical coherent transponder according to claim 1, wherein said optical amplifier (OA1) is a doped fiber amplifier or an erbium doped fiber amplifier.

9. Optical coherent transponder according to claim 1, wherein said digital signal processor (DSP) is operable to furthermore filter said digital signal, using a pulse-shaping filter.

10. Optical coherent transponder according to claim 9, wherein said pulse-shaping filter is a raised-cosine filter.

11. Optical coherent transponder according to claim 7, wherein said digital signal processor (DSP) is operable to provide digital data signals to a digital-analogue converter,
wherein said digital-analogue converter (ADC) is operable to convert said digital data signals to analogue data signals and furthermore to provide said analogue data signals to said optical modulation device,
wherein said optical modulation device (M) is operable to modulate optical transmission carrier frequency signal in dependence on analogue data signals,
and wherein said digital signal processor (DSP) is furthermore operable to perform a predistortion of said digital data signals, such that a frequency response of said digital signal is essentially flat within a pre-defined spectral range.

12. Optical coherent transponder according to claim 11, wherein said digital signal processor (DSP) is operable to provide said digital data signals using a pulse-shaping filter.

13. Optical coherent transponder according to claim 12, wherein said digital signal processor (DSP) is furthermore operable to perform said predistortion of said digital data signals, by modifying said pulse-shaping filter.

14. Optical coherent transponder according to claim 12, wherein said pulse-shaping filter is a raised-cosine filter.

15. Optical coherent transponder according to claim 11, wherein said digital-analogue converter (ADC) provides said analogue data signals to said optical modulation device via a signal driver.

**Patentansprüche**

1. Optischer kohärenter Transponder, der in einer Übertragungsstufe (TX) einen optischen Verstärker (OA1) aufweist, der an einen Lichtleiter (OF1) anschließbar ist, der in einer Empfängerstufe (RX) Folgendes aufweist:

   - einen kohärenten optischen Vorrechner (C), der betreibbar ist, um ein empfangenes optisches Signal, das an einem Eingang des kohärenten optischen Vorrechners (c) empfangen worden ist, herunterzutransformieren, und zwar unter Verwendung eines optischen Trägerfrequenzsignals, und der ferner betreibbar ist, um das erhaltene heruntertransformierte optische Signal in mindestens ein heruntertransformiertes elektrisches Signal umzuwandeln,
   - einen Analog/Digital-Wandler (ADC), der betreibbar ist, um das heruntertransformierte elektrische Signal in mindestens ein digitales Signal umzuwandeln,
   - mindestens einen Digitalsignalprozessor (DSP), der betreibbar ist, um das digitale Signal zu filtern,

   der ferner mindestens einen ersten optischen Schalter (S1) und einen zweiten optischen Schalter (S2) aufweist, wobei der Digitalsignalprozessor (DSP) ferner betreibbar ist, um das digitale Signal zu filtern, sodass ein Frequenzgang des gefilterten digitalen Signals innerhalb eines vorher definierten Spektralbereichs im Wesentlichen flach ist, **gekennzeichnet durch** einen abstimmbaren Laser (TL2), der betreibbar ist, um das optische Trägerfrequenzsignal zu liefern, und ferner **dadurch** gekennzeichnet, dass der erste optische Schalter und der zweite optische Schalter (S1, S2) gemeinsam konfigurierbar sind, um den Ausgang von dem optischen Verstärker (OA1) oder einem weiteren Lichtleiter mit dem Eingang des kohärenten optischen Vorrechners (C) zu verbinden.

2. Optischer kohärenter Transponder nach Anspruch 1,
   der ferner mindestens eine Steuereinheit (CTRL) aufweist, die betreibbar ist, um eine Konfiguration der optischen Schalter (S1, S2) zu steuern.

3. Optischer kohärenter Transponder nach Anspruch 1,
   wobei ein Eingang des ersten optischen Schalters (S1) mit dem Ausgang des optischen Verstärkers (OA1) verbunden ist,
   wobei ein erster Ausgang des ersten optischen Schalters (S1) mit einer optischen Übertragungsschnittstelle (OIF1) verbunden ist,
   wobei ein zweiter Ausgang des ersten optischen Schalters (S1) mit einem ersten Eingang des zweiten optischen Schalters (S2) verbunden ist,
   wobei ein Empfangs-Lichtleiter (OF2) mit einem zweiten Eingang des zweiten optischen Schalters (S2) verbunden ist, und
   wobei ein Ausgang des zweiten optischen Schalters (S2) mit dem Eingang des kohärenten optischen Vorrechners (C) verbunden ist.

4. Optischer kohärenter Transponder nach Anspruch 3,
   wobei der zweite Ausgang des ersten optischen Schalters (S1) indirekt mit dem ersten Eingang des zweiten optischen Schalters (S2) über einen optischen Bandpassfilter verbunden ist.

5. Optischer kohärenter Transponder nach Anspruch 3,
   wobei der Ausgang des zweiten optischen Schalters (S2) indirekt mit dem Eingang des kohärenten optischen Vorrechners (C) über einen weiteren optischen Verstärker (OA2) verbunden ist.

6. Optischer kohärenter Transponder nach Anspruch 1,
   wobei der abstimmbare Laser (TL2) mit einem weiteren Eingang des kohärenten optischen Vorrechners (C) verbunden ist.

7. Optischer kohärenter Transponder nach Anspruch 2,
   wobei die Übertragungsstufe (TX) ferner einen weiteren abstimmbaren Laser (TL1) aufweist, der betreibbar ist, um ein optisches Übertragungs-Trägerfrequenzsignal zu liefern,
   wobei der weitere abstimmbare Laser (TL1) über eine optische Modulationseinheit (M) mit einem Eingang des optischen Verstärkers (OA1) verbunden ist,
   und
   wobei die Steuereinheit (CTRL) betreibbar ist, um den weiteren abstimmbaren Laser (TL1) einzuschalten und auszuschalten.

**8.** Optischer kohärenter Transponder nach Anspruch 1,
wobei der optische Verstärker (OA1) ein dotierter Lichtleiterverstärker oder ein mit Erbium dotierter Lichtleiterverstärker ist.

**9.** Optischer kohärenter Transponder nach Anspruch 1,
wobei der Digitalsignalprozessor (DSP) betreibbar ist, um das digitale Signal zu filtern, und zwar unter Verwendung eines Impulsformungsfilters.

**10.** Optischer kohärenter Transponder nach Anspruch 9,
wobei der Impulsformungsfilter ein Raised-Cosine-Filter ist.

**11.** Optischer kohärenter Transponder nach Anspruch 7,
wobei der Digitalsignalprozessor (DSP) betreibbar ist, um einem Digital/Analog-Wandler digitale Signale zu liefern,
wobei der Digital/Analog-Wandler (DAC) betreibbar ist, um die digitalen Datensignale in analoge Datensignale umzuwandeln und ferner die analogen Datensignale der optischen Modulationseinheit zu liefern,
wobei die optische Modulationseinheit (M) betreibbar ist, um das optische Übertragungs-Trägerfrequenzsignal in Abhängigkeit von analogen Datensignalen zu modulieren, und
wobei der Digitalsignalprozessor (DSP) ferner betreibbar ist, um eine Vorverzerrung der digitalen Datensignale durchzuführen, sodass ein Frequenzgang des digitalen Signals innerhalb eines vorher definierten Spektralbereichs im Wesentlichen flach ist.

**12.** Optischer kohärenter Transponder nach Anspruch 11,
wobei der Digitalsignalprozessor (DSP) betreibbar ist, um die digitalen Datensignale zu liefern, und zwar unter Verwendung eines Impulsformungsfilters.

**13.** Optischer kohärenter Transponder nach Anspruch 12,
wobei der Digitalsignalprozessor (DSP) ferner betreibbar ist, um die Vorverzerrung der digitalen Datensignale durchzuführen, und zwar durch Modifizieren des Impulsformungsfilters.

**14.** Optischer kohärenter Transponder nach Anspruch 12,
wobei der Impulsformungsfilter ein Raised-Cosine-Filter ist.

**15.** Optischer kohärenter Transponder nach Anspruch 11,

wobei der Digital/Analog-Wandler (DAC) die analogen Datensignale der optischen Modulationseinheit über einen Signaltreiber liefert.

## Revendications

**1.** Transpondeur optique cohérent :

comprenant, lors d'une étape de transmission (TX), un amplificateur optique (OA1), qui est connectable à une fibre optique (OF1) ;
comprenant, lors d'une étape de réception (RX) :

une interface avant d'entrée optique cohérente (C), opérable pour effectuer une conversion-réduction d'un signal optique reçu, ce dernier étant reçu d'une entrée au niveau de ladite interface avant d'entrée optique cohérente (C), par le biais d'un signal à fréquence de porteuse optique, et en outre opérable pour convertir ledit signal optique converti-réduit vers au moins un signal électrique converti-réduit ;
un convertisseur analogique-numérique (ADC), opérable pour convertir ledit signal électrique converti-réduit vers au moins un signal numérique ;
au moins un processeur de traitement de signal numérique (DSP), opérable pour filtrer ledit signal numérique ;

comprenant en outre au moins un premier (S1) et un deuxième (S2) commutateur optique, selon lequel ledit processeur de traitement de signal numérique (DSP) est en outre opérable pour filtrer ledit signal numérique, de telle sorte que la réponse en fréquences du signal numérique filtré est sensiblement plate dans une fourchette spectrale prédéfinie ;
**caractérisé par** :

un laser réglable (TL2), opérable pour fournir ledit signal à fréquence de porteuse optique ;
et **caractérisé en outre en ce que** ledit premier (S1) et ledit deuxième (S2) commutateurs optiques sont configurables conjointement pour connecter ladite sortie dudit amplificateur optique (OA1) ou d'une fibre optique supplémentaire avec ladite entrée de ladite interface d'entrée optique cohérente (C).

**2.** Transpondeur optique cohérent selon la revendication 1, comprenant en outre au moins une unité de commande (CTRL), opérable pour commander une configuration desdits commutateurs optiques (S1, S2).

3. Transpondeur optique cohérent selon la revendication 1 :

   selon lequel une entrée dudit premier commutateur optique (S1) est connectée à ladite sortie dudit amplificateur optique (OA1) ;
   selon lequel une première sortie dudit premier commutateur optique (S1) est connectée à une interface de transmission optique (OIF1) ;
   selon lequel une deuxième sortie dudit premier commutateur optique (S1) est connectée à une première entrée dudit deuxième commutateur optique (S2) ;
   selon lequel une fibre optique de réception (OF2) est connectée à une deuxième entrée dudit deuxième commutateur optique (S2) ;
   et selon lequel une sortie dudit deuxième commutateur optique (S2) est connectée à ladite entrée de ladite interface avant d'entrée optique cohérente (C).

4. Transpondeur optique cohérent selon la revendication 3, selon lequel ladite deuxième sortie dudit premier commutateur (S1) est connectée indirectement à ladite première entrée dudit deuxième commutateur optique (S2) via un filtre optique à passage de bande.

5. Transpondeur optique cohérent selon la revendication 3, selon lequel ladite sortie dudit deuxième commutateur optique (S2) est connectée indirectement à ladite entrée de ladite interface avant d'entrée optique cohérente (C) via un amplificateur optique supplémentaire.

6. Transpondeur optique cohérent selon la revendication 1, selon lequel ledit laser réglable (TL2) est connecté à une entrée supplémentaire de ladite interface avant d'entrée optique cohérente (C).

7. Transpondeur optique cohérent selon la revendication 2 :

   selon lequel l'étape de transmission (TX) comprend en outre un laser réglable supplémentaire (TL1), opérable pour fournir un signal à fréquence de porteuse optique de transmission ;
   selon lequel ledit laser réglable supplémentaire (TL1) est connecté via un dispositif de modulation optique (M) à une entrée dudit amplificateur optique (OA1) ; et
   selon lequel ladite unité de commande (CTRL) est opérable pour effectuer l'allumage et l'extinction dudit laser réglable supplémentaire (TL1).

8. Transpondeur optique cohérent selon la revendication 1, selon lequel ledit amplificateur optique (OA1) est un amplificateur à fibre dopée ou un amplificateur à fibre dopée à l'erbium.

9. Transpondeur optique cohérent selon la revendication 1, selon lequel ledit processeur de traitement de signal numérique (DSP) est opérable pour filtrer en outre ledit signal numérique, par le biais d'un filtre à formage d'impulsion.

10. Transpondeur optique cohérent selon la revendication 9, selon lequel ledit filtre à formage d'impulsion est un filtre à la puissance élevée au cosinus.

11. Transpondeur optique cohérent selon la revendication 7, selon lequel processeur de traitement de signal numérique (DSP) est opérable pour fournir des signaux de données numériques à un convertisseur numérique-analogique ;
   selon lequel le convertisseur numérique-analogique (ADC) est opérable pour convertir lesdits signaux de données numériques en signaux de données analogiques et en outre de fournir lesdits signaux de données analogiques audit dispositif de modulation optique ;
   selon lequel ledit dispositif de modulation optique (M) est opérable pour moduler un signal à fréquence de porteuse optique de transmission en fonction des signaux de données analogiques ; et
   selon lequel ledit processeur de traitement de signal numérique (DSP) est en outre opérable pour effectuer une distorsion préalable desdits signaux de données numériques, de telle sorte qu'une réponse en fréquence dudit signal numérique est sensiblement plate dans une fourchette spectrale prédéfinie.

12. Transpondeur optique cohérent selon la revendication 11, selon lequel ledit processeur de traitement de signal numérique (DSP) est opérable pour fournir lesdits signaux de données numériques par le biais d'un filtre à formage d'impulsion.

13. Transpondeur optique cohérent selon la revendication 12, selon lequel ledit processeur de traitement de signal numérique (DSP) est en outre opérable pour fournir effectuer ladite distorsion préalable desdits signaux de données numériques en modifiant ledit filtre à formage d'impulsion.

14. Transpondeur optique cohérent selon la revendication 12, selon lequel ledit filtre à formage d'impulsion est un filtre à la puissance élevée au cosinus.

15. Transpondeur optique cohérent selon la revendication 11, selon lequel ledit convertisseur numérique-analogique (ADC) fournit lesdits signaux de données analogiques audit dispositif de modulation optique via un pilote de signal.

## Fig. 1

EP 2 713 532 B1

## Fig. 2a

**Before Calibration**

## Fig. 2b

**After Calibration**

# Fig. 3

Switch off TX laser, TX and RX switches
activated (ASE noise sent to receiver) — ST1

Measure of Coh Front end response by
ADC (ASE noise / LO beating) — ST2

Calibration of receiver frequency response — ST3

## Fig. 4a

Native RRC 0.1 — TS

Power [dBm] vs wavelength [nm]

## Fig. 4a

CTS

Power [dBm] vs wavelength [nm]

# Fig. 5

Switch off TX laser, TX and RX switches
actived (TX signal sent to RX) —— ST11

↓

Measure of transmitter
(DAC/Driver/modulator) frequency response —— ST12

↓

In band response flattering => programming
of DAC FIR filter
Out of band response reduction => non linear
coefficient estimation —— ST13

# Fig. 6

EP 2 713 532 B1

Fig.6

**EP 2 713 532 B1**

**Patent documents cited in the description**

- EP 2493101 A1